# EUROPÄISCHE PATENTSCHRIFT

(11) **EP 2 931 520 B1**
(45) Veröffentlichungstag und Bekanntmachung des Hinweises auf die Patenterteilung: **31.01.2024**
(21) Anmeldenummer: 13820723.8
(22) Anmeldetag: 11.12.2013
(51) Int. Cl.: B32B 15/08, C21D 8/12, H01F 1/18, H02K 1/04, H02K 15/12

(54) **BLECHPAKET UND VERFAHREN ZUM VERBINDEN VON BLECHTEILEN ZU EINEM BLECHPAKET**
LAMINATED CORE AND METHOD FOR CONNECTING SHEET METAL PARTS TO FORM A LAMINATED CORE
NOYAU FEUILLETÉ ET PROCÉDÉ POUR ASSEMBLER DES PIÈCES DE TÔLE POUR FORMER UN NOYAU FEUILLETÉ

(30) Priorität: 11.12.2012 AT 505762012
(43) Veröffentlichungstag der Anmeldung: 21.10.2015
(73) Patentinhaber: voestalpine Stahl GmbH, 4020 Linz (AT)
(72) Erfinder: FLUCH, Ronald, A-4020 Linz (AT)
(74) Vertreter: Jell, Friedrich
(86) Internationale Anmeldenummer: PCT/AT2013/050246
(87) Internationale Veröffentlichungsnummer: WO 2014/089593

(56) Entgegenhaltungen:
- EP-A1- 0 141 187
- EP-A1- 1 679 727
- EP-A1- 2 450 189
- WO-A2-2010/109272
- DE-B- 1 096 476
- DE-B- 1 212 240
- DE-B- 1 225 753
- DE-C- 808 476

## Beschreibung

### Technisches Gebiet

Die Erfindung betrifft ein Blechpaket und ein Verfahren zum Verbinden von Blechteilen zu einem Blechpaket, bei dem Blechteile von einem Blechband mit einer wenigstens bereichsweisen, aushärtbaren, polymeren Klebstoffschicht abgetrennt werden, die Blechteile mit einander zugewandten klebstoffbeschichteten Seiten übereinander vorgesehen und zu einem Blechpaket unter Druck stoffschlüssig verbunden werden.

### Stand der Technik

Um Blechteile mit einer Beschichtung aus Backlack zu einem Blechpaket stoffschlüssig verbinden zu können, ist es aus dem Stand der Technik bekannt (WO2012/059588A1), den Backlack durch Wärme zu erhitzen und damit zu aktivieren, um diesen unter Druck mit anschließenden Blechteilen bzw. deren Backlack zu verkleben. Zudem werden die Klebstofflagen zwischen den Blechteilen einer abschließenden Aushärtung, beispielsweise in einem Ofen, unterworfen, um eine mechanische Stabilität des Blechpakets sicherzustellen, das als Stator/Rotor von elektrischen Maschinen mit hohen Drehzahlen Verwendung finden kann. Nachteilig erfordert solch eine Herstellung einen nicht unerheblichen Zeit- und Energieaufwand.

Aus der DE1225753B ist ein Verfahren zur Herstellung eines Blechpakets bekannt, bei dem ein Beschleuniger auf bereits mit einem Isolierlack versehene Bleche aufgebracht wird. Um eine Haftung zwischen Blechteilen zu erzeugen, schlägt die DE808476C vor, eine Folie aus Polyvinylacetat, die auf beiden Seiten mit einem in der Hitze erhärtenden Harz überzogen ist, zu verwenden.

### Darstellung der Erfindung

Es ist daher die Aufgabe der Erfindung, ausgehend vom eingangs geschilderten Stand der Technik, ein Verfahren zu schaffen, mit dem ein standfestes Blechpaket energieeffizient hergestellt werden kann. Zudem soll das Verfahren reproduzierbar durchgeführt werden können und Vorteile durch seine zeitlich schnelle Abfolge liefern.

Die Erfindung löst die gestellte Aufgabe durch die Merkmale des Anspruchs 1.

Wird auf mindestens einer der einander beim stoffschlüssigen Verbinden der Blechteile zugewandten Klebstoffschichten eine Mischung, aufweisend Wasser und einen thermoplastischen und/oder vernetzbaren Haftvermittler, vorgesehen, kann auf besondere Maßnahmen zur Aushärtung des Blechpakets verzichtet und energieschonend ein äußerst standfestes Blechpaket geschaffen werden. Es konnte nämlich überraschend festgestellt werden, dass durch die Wasserbenetzung der Klebstoffschicht unter Reaktion mit dem Haftvermittler eine ausreichend vorbehandelte Grenzschicht erzeugt werden kann, mit der eine andere Klebstoffschicht bzw. der Haftvermittler der anderen Klebstoffschicht anbinden kann. Das erfindungsgemäße Zusammenfügen der Blechteile unter Druck kann nun durchaus ausreichen, zwischen den Klebstoffschichten eine mechanisch belastbare stoffschlüssige Verbindung sicherzustellen. Diese Vorteile zeigen sich insbesondere bei Klebstoffschichten aus Backlack, die mit Hilfe von Wasser zumindest teilweise plastifiziert und so eine besonders starke Reaktion mit dem Haftvermittler zeigen, insbesondere wenn dieser aus Polyvinylalkohol besteht. Da im Gegensatz zum Stand der Technik selbst durch das stoffschlüssige Fügen unter Druck für eine ausreichende mechanische Stabilität des Blechpakets gesorgt werden kann, ist auch eine Aushärtung der Klebstoffschichten, insbesondere des Backlacks, des Blechpakets im Rahmen dessen Verwendung vorstellbar. Eine durch Verlustleistung entstehende Wärme elektrischer Maschinen kann durchaus ausreichen, die Aushärtung des Blechpakets abzuschließen. Durch das erfindungsgemäße Verfahren können daher nicht nur reproduzierbar standfeste Blechpakete hergestellt werden, es kann dadurch auch mit vergleichsweise geringem Energieeinsatz eine kostengünstige Herstellung ermöglicht werden.

Im Allgemeinen wird erwähnt, dass unter der Bezeichnung Backlack bekanntermaßen Polyvinylbutyral, Polyamid, Polyester, modifizierte Polyamide etc. eingeordnet werden können. Des Weiteren wird im Allgemeinen erwähnt, dass unter Haftvermittler alle Substanzen verstanden werden können, die dazu eingesetzt werden, die Haftfestigkeit von Verbünden zu verbessern. Unter einem Haftvermittler kann daher neben einem Polyvinylalkohol auch ein Amin mit einer vernetzenden Reaktion zur Verbesserung der Haftfestigkeit von Verbünden verstanden werden.

Vorteilhaft kann sein, wenn der Haftvermittler wasserlöslich ist, um eine Haftvermittlerschicht in nanoskaliger Schichtdicke auf der Klebstoffschicht zu schaffen. Dies kann eine vergleichsweise hohe Reaktionsfähigkeit beim Fügen unter Druck sicherstellen. Weiter kann das Verfahren vereinfacht und/oder reproduzierbarer werden, wenn die Klebstoffschicht aus Backlack besteht und/oder die Klebstoffschicht auf beiden Bandseiten des Blechbands vorgesehenen ist und/oder die Blechteile vom Blechband durch Ausstanzen abgetrennt werden.

Die Verfahrensverhältnisse können weiter vereinfacht werden, indem die Mischung erfindungsgemäß vor dem stoffschlüssigen Verbinden der Blechteile getrocknet wird. Damit kann nicht nur die Verteilung des Haftvermittlers bzw. dessen Schichtdicke sicher eingestellt werden, diese Parameter bleiben auch beim Zusammenfügen der Blechteile unter Druck gewährleistet.

Wird die Mischung vor einem Abtrennen der Blechteile auf das Blechband aufgetragen, kann ein Auftrag des Haftvermittlers selbst in Randbereichen der Blechteile sichergestellt sein. Solch eine vollflächige Benetzung der Klebstoffschicht kann somit zu mechanisch besonders belastbaren Blechpaketen führen.

Die Blechteile können verfahrenssicher gefügt werden, wenn der Haftvermittler unmittelbar vor dem stoffschlüssigen Verbinden der Blechteile aktiviert wird.

Werden der Haftvermittler und die Klebstoffschicht gleichzeitig aktiviert, kann die Anbindung des Haftvermittlers an die Klebstoffschicht verbessert werden. Durch die Aktivierung der Klebstoffschicht kann die erhöhte Benetzbarkeit seiner Oberfläche nämlich genutzt werden, den Haftvermittler an die Klebstoffschicht verbessert physikalisch anzubinden.

Prozessoptimiert kann der Haftvermittler und/oder die Klebstoffschicht vor dem Abtrennen des Blechteils vom Blechband aktiviert werden. Zudem kann der Verfahrensschritt der Aktivierung in einen verfahrenstechnisch eher unkritischen Zeitbereich verlagert werden, was die Handhabung des Verfahrens erleichtern kann. Insbesondere wenn mehrmals Teile vom Blechband abgetrennt werden, um damit die Abmessungen des abzutrennenden Blechteils auszubilden, kann zwischen diesen Abtrennschritten die Aktivierung handhabungsfreundlich vorgenommen werden.

Werden die Blechteile von einem Blechband mit einer auf beiden Bandseiten des Blechbands vollflächig vorgesehenen Klebstoffschicht abgetrennt, kann sich die Handhabung des Verfahrens hinsichtlich des Einbringens einer Haftvermittlerschicht zwischen zwei Klebstoffschichten erheblich erleichtern. Eine Reduzierung der Herstellungskosten kann auf diese Weise erreicht werden.

Ein Verbinden der Blechteile kann ermöglicht werden, wenn sich die unter der Abtrenneinrichtung in Säulenform übereinander gestapelten Blechteile unter dem Druck der Abtrenneinrichtung stoffschlüssig miteinander verbinden.

Um ein standfestes stoffschlüssiges Fügen der Blechteile sicherzustellen, kann die Abtrenneinrichtung eine Bremse für die abgetrennten Blechteile ausbilden. Zu diesem Zweck werden die Blechteile in einer Leitung übereinander gestapelt, die einen Widerstand auf die Weiterwanderung der Blechteile in der Leitung ausübt.

Als besonders vorteilhaft kann sich ein Haftvermittler aus Polyvinylalkohol herausstellen, um eine verhältnismäßig dünne Haftvermittlerschicht auf der Klebstoffschicht zu erzeugen. Zudem konnte eine besonders hohe chemische/physikalische Reaktionsfähigkeit des Haftvermittlers aus Polyvinylalkohol mit Backlack festgestellt werden, was mechanisch äußerst belastbare Blechpakete ermöglichen kann. Alternativ dazu ist auch ein Haftvermittler aus einer Celluloseverbindung, insbesondere Carboxymethylcellulose, denkbar.

Werden der Mischung Füllstoffe beigefügt, kann unter anderem die Menge an erforderlichem Haftvermittler verringert werden. Des Weiteren ist es möglich, eine verbesserte Verbindung der Klebstoffschichten und somit ein mechanisch belastbareres Blechpaket zu erreichen. Auch hinsichtlich des Verfahrensschrittes der Aktivierung können Füllstoffe gezielt genutzt werden. Zudem kann sich Kaolin als Füllstoff in einer Haftvermittlerschicht auszeichnen, die zwischen aus Backlack bestehenden Klebstoffschichten vorgesehen ist. Andere Füllstoffe sind denkbar und damit nicht ausgeschlossen.

In dem der Mischung ein insbesondere wasserlöslicher Reaktionsbeschleuniger beigefügt wird, kann die chemische Reaktion zwischen den polymeren Klebstoffschichten und dem Haftvermittler deutlich verbessert werden. Insbesondere die Verwendung von 2-Methylimidazole als Reaktionsbeschleuniger konnte sich bei Backlack-Klebstoffschichten auszeichnen. Wird der Mischung ein wasserlöslicher Vernetzer insbesondere auf Melaminbasis, beigefügt, kann die Vernetzung der Polymere erheblich gesteigert werden. Insbesondere teilverethertes Melaminharz konnte sich bei der Verwendung von Klebstoffschichten aus Backlack auszeichnen. Weiter ist denkbar, der Mischung ein in Wasser dispergierbarer Vernetzer, insbesondere mit einer Isocyanatbasis, wie beispielsweise Isophorondiisocyanat, beizufügen.

Die Erfindung hat sich außerdem die Aufgabe gestellt, ein Blechpaket zu schaffen, das trotz hoher mechanischer Festigkeit energieschonend hergestellt werden kann.

Die Erfindung löst die gestellte Aufgabe hinsichtlich des Blechpakets durch die Merkmale des Anspruchs 13.

Ist zwischen zwei Klebstoffschichten ein Haftvermittler vorgesehen, kann im Gegensatz zum Stand der Technik auf einen gesonderten Aushärtungsschritt im kontinuierlichen Herstellungsverfahren des Blechpakets verzichtet werden. Die Haftvermittlerschicht kann nämlich für eine ausreichende mechanische Festigkeit des Blechpakets sorgen. Zudem kann durch die mechanische Festigkeit, die durch ein Vorsehen der Haftvermittlerschicht erreicht werden kann, der Zeitpunkt der vollständigen Aushärtung des Blechpakets vom Herstellungsverfahren in die technische Verwendung des Blechpakets verschoben werden. Ein thermoplastischer und/oder vernetzbarer Haftvermittler ist hierzu vorstellbar. Ein kostengünstig herzustellendes Blechpaket kann dadurch geschaffen werden.

Eine besonders vorteilhafte stoffschlüssige Verbindung kann sich ergeben, wenn die Klebstoffschichten aus Backlack bestehen.

Als Haftvermittler kann sich Polyvinylalkohol auszeichnen, um eine besonders starke Reaktion mit der Klebstoffschicht zu erzeugen.

Konstruktive Einfachheit am Blechpaket kann ermöglicht werden, wenn je eine Klebstoffschicht auf einem Blechteil vorgesehen ist.

Außerdem kann sich die Erfindung gegenüber dem Stand der Technik besonders abheben, wenn ein wasserlöslicher thermoplastischer Haftvermittler, insbesondere Polyvinylalkohol, zur Ausbildung einer stoffschlüssigen Verbindung zwischen zwei aushärtbaren polymeren Klebstoffschichten, insbesondere bestehend aus Backlack, je aufgebracht auf ein Blechteil, bei der Herstellung eines Blechpakets für elektromagnetische Bauteile verwendet wird.

Vorgenannte Verwendung kann verbessert werden, wenn eine Mischung, aufweisend Wasser und Haftvermittler, aufgebracht wird.

### Kurze Beschreibung der Zeichnungen

In den Figuren ist beispielsweise der Erfindungsgegenstand anhand eines Ausführungsbeispiels dargestellt. Es zeigen
- Fig. 1: eine schematische Ansicht auf eine Vorrichtung zur Herstellung eines Blechpakets,
- Fig. 2: eine abgerissene vergrößerte Ansicht zur Fig. 1 und
- Fig. 3: eine Detailansicht zur stoffschlüssigen Verbindung zwischen zwei Blechteilen des Blechpakets nach Fig. 1.

### Weg zur Ausführung der Erfindung

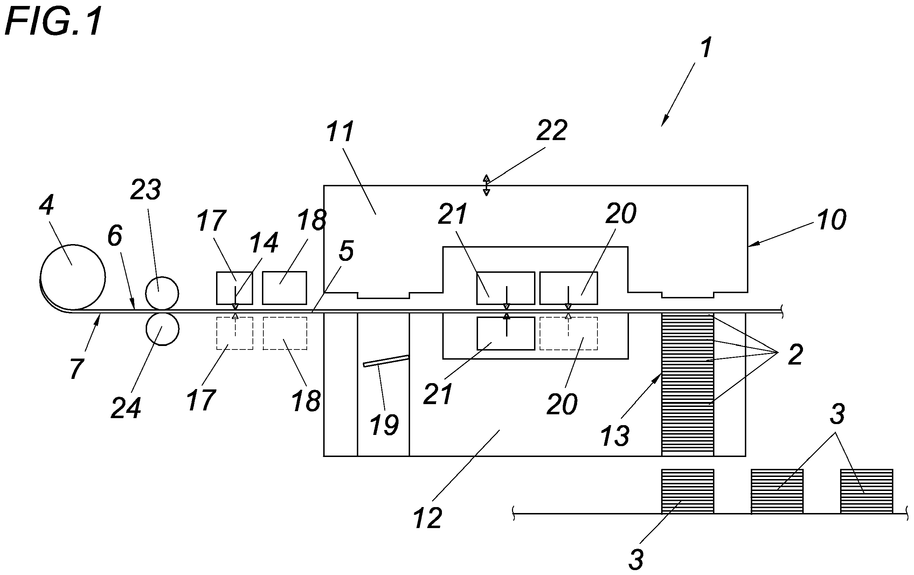

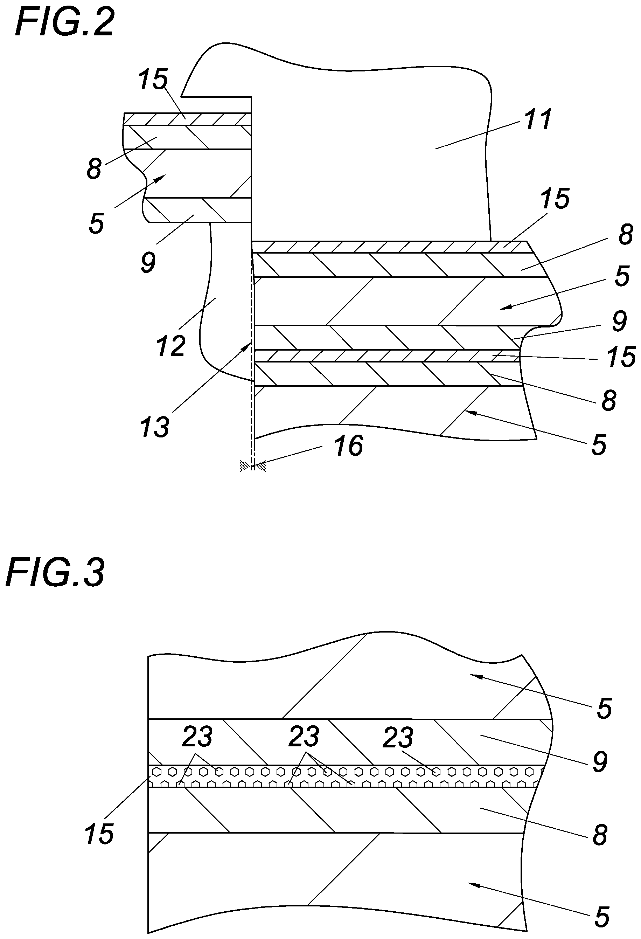

Gemäß Fig. 1 wird beispielsweise eine Vorrichtung 1 gezeigt, mit dem das erfindungsgemäße Verfahren zum Verbinden von Blechteilen 2 zu einem Blechpaket 3 durchführt wird. So wird von einem Coil 4 ein Blechband 5 abgewickelt, das auf beiden Bandseiten 6, 7 vollflächig eine aushärtbare polymere Klebstoffbeschichtung 8, 9 aus Backlack aufweist. Von diesem Blechband 5 werden mithilfe einer Abtrenneinrichtung 10 Blechteile 2 ausgestanzt. Dadurch, dass auf beiden Bandseiten 6, 7 je eine Klebstoffbeschichtung 8, 9 vorliegt, können die ausgestanzten Blechteile 2, ohne diese wenden zu müssen, mit einander zugewandten klebstoffbeschichteten Seiten übereinander vorgesehen werden. Unter dem Druck des Oberwerkzeugs 11 werden die Blechteile 2 zu einem Blechpaket 3 stoffschlüssig gefügt, wobei zur Führung der Blechteile 2 im Unterwerkzeug 12 eine Leitung 13 vorgesehen ist. Die Blechpakete 3, die die Leitung 13 verlassen, sind mechanisch ausreichend fest verbunden, denn im Gegensatz zum Stand der Technik wird auf der Klebstoffschicht 8, von den einander beim stoffschlüssigen Verbinden der Blechteile 2 zugewandten Klebstoffschichten 8, 9, eine Mischung 14, enthaltend Wasser und einen thermoplastischen Haftvermittler 15, vorgesehen, wie dies insbesondere der Fig. 2 entnommen werden kann. Als Haftvermittler 15 wird Polyvinylalkohol verwendet.

Zum Auftragen des Haftvermittlers 15 weist die Vorrichtung 1 eine Sprüheinrichtung 17 auf, die die Mischung 14 auf die Klebstoffbeschichtung 8 des Blechbands 5 aufbringt. Vorteilhaft wird die Mischung aus Wasser und Haftvermittler 15 zur Ausbildung einer nanoskalig dicken Haftvermittlerschicht verwendet. Die Wasserlöslichkeit des Haftvermittlers 15 trägt zusätzlich zur Reduktion der Schichtdicke der Haftvermittlerschicht bei.

Dadurch, dass die Mischung 14 mit einer an die Sprüheinrichtung 17 anschließenden Trocknungseinrichtung 18 getrocknet wird, ist selbst beim kontinuierlichen Verfahren der Vorrichtung 1 eine gleichbleibende Schichtdicke gewährleistet, was reproduzierbar mechanisch feste Blechpakete 3 sicherstellt.

Für einen schnellen Ablauf des Verfahrens wird die Mischung 14 vor einem Abtrennen der Blechteile 2 auf das Blechband 5 aufgetragen. Der Verfahrensablauf kann weiter beschleunigt werden, indem der Haftvermittler 15 und die Klebstoffschichten 8, 9 vor dem Abtrennen des Blechteils 2 vom Blechband 5 aktiviert werden. Dieser Verfahrensschritt befindet sich, wie in Fig. 1 dargestellt, zwischen zwei Abtrennschritten am Blechband 5. Von der Abtrenneinrichtung 10 werden nämlich auch Teile 19 vom Blechband 5 vorab abgetrennt, um damit das Blechband 5 für ein Endabtrennen der Blechteile 2 vorzubereiten.

Der vergleichsweise reaktive Haftvermittler 15 wird unmittelbar vor dem stoffschlüssigen Verbinden der Blechteile 2 aktiviert, indem eine Heizeinrichtung 20 das Blechband 5 auf 100 Grad Celsius erwärmt. Vor der Heizeinrichtung 20 ist eine Aktivierungseinrichtung 21 vorgesehen, die zur Aktivierung der Klebstoffbeschichtung 8, 9 dient - beispielsweise indem diese Schichten 8, 9 mit heißem Wasserdampf belastet werden. Vorstellbar ist zudem, dass die Klebstoffbeschichtungen 8, 9 und der Haftvermittler 15 gleichzeitig von der Heizeinrichtung 20 aktiviert werden.

Einfache Konstruktionsverhältnisse ergeben sich, indem die Blechteile 2 in der Leitung 13 des Unterwerkzeugs 12 in Säulenform übereinander gestapelt, nämlich direkt unter dem Oberwerkzeug 11 der Abtrenneinrichtung 10. Das insbesondere eine Antihaftbeschichtung (z.B.: Polytetrafluorethylen) aufweisende Oberwerkzeug 11 übt durch seine Stanzbewegung 22 einen Druck auf die säulenförmig in der Leitung 13 gestapelten Blechteile 2 aus. Da die Leitung 13 auf die Weiterwanderung der Blechteile 2 in der Leitung 13 einen Widerstand in der Art einer Paketbremse 16 ausübt, ist ein Fügen der Blechteile 2 unter Druck sichergestellt. Eine standfeste stoffschlüssige Verbindung wird so geschaffen.

Diese Verbindung bildet sich zudem durch Füllstoffe 23, nämlich Kaolin, in der Mischung 14 mechanisch belastbarer aus, welche Füllstoffe 23 sich im Haftvermittler 15 anordnen, wie dies der Fig. 3 entnommen werden kann. Diese mechanische Belastbarkeit der stoffschlüssigen Verbindung zwischen den Blechteilen 2 wird weiter erhöht, indem der Mischung auch ein wasserlöslicher Reaktionsbeschleuniger, nämlich 2-Methylimidazole, und ein wasserlöslicher Vernetzer, nämlich teilverethertes Melaminharz, beigefügt wird. Ein standfestes Blechpaket 3 ist so geschaffen.

Im Allgemeinen wird erwähnt, dass durch Aktivierung des Backlacks und/oder des Haftvermittlers eine physikalische Anbindung möglich wird. Dabei wird die diesbezügliche Substanz klebrig, sodass eine stoffschlüssige Verbindung aufgebaut werden kann. Eine chemisch härtende Anbindung muss dabei nicht zwangsweise eintreten. Vorteilhaft wird Backlack und Haftvermittler bei der Aktivierung einer Temperatur gleichzeitig unterworfen, die beide Substanzen aktivieren kann. Dabei ist eine Temperatur von 70 bis 100 °C mit einer Bandbreite von +-10% vorstellbar.

Gemäß Fig. 1 sind an der Vorrichtung 1 zudem Beschichtungswalzen 23, 24 zu erkennen, die in Abhängigkeit einer nicht näher dargestellten Steuer- bzw. Regeleinrichtung der Vorrichtung 1 auf das Blechband 5, nämlich auf seine polymere Klebstoffbeschichtung 8, eine Trennbeschichtung aufbringen. Dies kann beispielsweise mithilfe einer auflaminierten Trennfolie geschehen. Diese Beschichtung erfolgt in jenen Bereichen des Blechbands 5 derart, dass nach dem Abtrennen eines damit beschichteten Blechteils, dieses Blechteil die Trennung von einem angrenzenden Blechpaket 3 erleichtert. Beispielsweise in dem dieses Blechteil mit seiner außen liegenden Beschichtung ein erstes oder letztes Blechteil eines Blechpakets 3 ausbildet. Zudem ist vorstellbar, dass sich dieses Blechteil zwischen angrenzenden Blechpaketen 3 befindet, und so die Blechpakete 3 leichter zu trennen sind.

Der Antrieb der Beschichtungswalzen ist entsprechend des Vorschubs der Vorrichtung über die Steuer- bzw. Regeleinrichtung einstellbar und garantieren eine zuverlässige Laminierung des Blechbands 5 mit einer Folie. Bevorzugt ist eine druck- und temperaturstabile Folie, um ein reproduzierbares Verfahren sicherzustellen.

## Patentansprüche

1. Verfahren zum Verbinden von Blechteilen (2) zu einem Blechpaket (3), bei dem Blechteile (2) von einem Blechband (5) mit einer wenigstens bereichsweisen, aushärtbaren, polymeren Klebstoffschicht (8, 9), nämlich Backlack, abgetrennt werden, die Blechteile (2) mit einander zugewandten klebstoffbeschichteten Seiten übereinander vorgesehen und zu einem Blechpaket (3) unter Druck stoffschlüssig verbunden werden, **dadurch gekennzeichnet, dass** auf mindestens einer der einander beim stoffschlüssigen Verbinden der Blechteile (2) zugewandten aushärtbaren, polymeren Klebstoffschichten (8, 9) eine Mischung (14), aufweisend Wasser und einen thermoplastischen und/oder vernetzbaren Haftvermittler (15), vorgesehen wird, und dass die Mischung (14) vor dem stoffschlüssigen Verbinden der Blechteile (2) getrocknet wird.

2. Verfahren nach Anspruch 1, **dadurch gekennzeichnet, dass** der Haftvermittler (15) wasserlöslich ist und/oder die Klebstoffschicht (8, 9) auf beiden Bandseiten (6, 7) des Blechbands (5) vorgesehenen ist und/oder die Blechteile (2) vom Blechband (5) durch Ausstanzen abgetrennt werden.

3. Verfahren nach Anspruch 1 oder 2, **dadurch gekennzeichnet, dass** die Mischung (14) vor einem Abtrennen der Blechteile (2) auf das Blechband (5) aufgetragen wird.

4. Verfahren nach einem der Ansprüche 1 bis 3, **dadurch gekennzeichnet, dass** der Haftvermittler (15) unmittelbar vor dem stoffschlüssigen Verbinden der Blechteile (2) aktiviert wird.

5. Verfahren nach einem der Ansprüche 1 bis 4, **dadurch gekennzeichnet, dass** der Haftvermittler (15) und die Klebstoffschicht (8, 9) gleichzeitig aktiviert werden.

6. Verfahren nach Anspruch 4 oder 5, **dadurch gekennzeichnet, dass** mehrmals Teile (2, 19) vom Blechband (5) abgetrennt werden, wobei der Haftvermittler (15) und/oder die Klebstoffschicht (8, 9) vor dem Abtrennen des Blechteils (2) vom Blechband (5) aktiviert werden.

7. Verfahren nach einem der Ansprüche 1 bis 6, **dadurch gekennzeichnet, dass** Blechteile (2) von einem Blechband (5) mit einer auf beiden Bandseiten (6, 7) des Blechbands (5) vollflächig vorgesehenen Klebstoffschicht (8, 9) abgetrennt werden.

8. Verfahren nach einem der Ansprüche 1 bis 7, **dadurch gekennzeichnet, dass** sich die unter der Abtrenneinrichtung (10) in Säulenform übereinander gestapelten Blechteile (2) unter dem Druck der Abtrenneinrichtung (10) stoffschlüssig miteinander verbinden.

9. Verfahren nach Anspruch 8, **dadurch gekennzeichnet, dass** die Blechteile in einer Leitung (13) übereinander gestapelt werden, die einen Widerstand auf die Weiterwanderung der Blechteile (2) in der Leitung (13) ausübt.

10. Verfahren nach einem der Ansprüche 1 bis 9, **dadurch gekennzeichnet, dass** der Haftvermittler (15) aus Polyvinylalkohol, einer Celluloseverbindung, insbesondere Carboxymethylcellulose, oder einem Amin mit einer vernetzenden Reaktion besteht.

11. Verfahren nach einem der Ansprüche 1 bis 10, **dadurch gekennzeichnet, dass** der Mischung (14) Füllstoffe (23), wie beispielsweise Kaolin, beigefügt werden.

12. Verfahren nach einem der Ansprüche 1 bis 11, **dadurch gekennzeichnet, dass** der Mischung ein insbesondere wasserlöslicher Reaktionsbeschleuniger, wie beispielsweise 2-Methylimidazole, und/oder ein wasserlöslicher Vernetzer insbesondere auf Melaminbasis, wie beispielsweise teilverethertes Melaminharz, und/oder ein in Wasser dispergierbarer Vernetzer, insbesondere mit einer Isocyanatbasis, wie beispielsweise Isophorondiisocyanat, beigefügt wird.

13. Blechpaket mit stoffschlüssig verbundenen Blechteilen (2), mit mindestens zwei zwischen zwei Blechteilen (2) vorgesehenen aushärtbaren polymeren Klebstoffschichten (8, 9), nämlich Backlack, **dadurch gekennzeichnet, dass** zwischen den zwei Klebstoffschichten (8, 9) ein Haftvermittler (15) vorgesehen ist, wobei der Haftvermittler (15) aus Polyvinylalkohol, einer Celluloseverbindung, insbesondere Carboxymethylcellulose, oder einem Amin mit einer vernetzenden Reaktion besteht.

## Claims

1. A method for connecting sheet metal parts (2) to form a laminated core (3), in which sheet metal parts (2) are separated from a sheet metal strip (5) having an at least regional curable polymer adhesive layer (8, 9), namely baking enamel, the sheet metal parts (2) are provided one above the other, with adhesive-coated sides toward one another, and are connected to form a laminated core (3) under pressure in materially bonded fashion, **characterized in that** on at least one of the hardenable polymer adhesive layers (8, 9) facing one another in the process of materially bonded connecting of the sheet metal parts (2), a mixture (14) having water and a thermoplastic and/or cross-linkable adhesion promoter (15) is provided and that the mixture (14) is dried prior to the connecting of the sheet metal parts (2) in materially bonded fashion.

2. The method of claim 1, **characterized in that** the adhesion promoter (15) is water-soluble and/or the adhesive layer (8, 9) is provided on both sides (6, 7) of the sheet metal strip (5) and/or the sheet metal parts (2) are separated from the sheet metal strip (5) by stamping.

3. The method of claim 1 or 2, **characterized in that** the mixture (14) is applied to the sheet metal strip (5) before the sheet metal parts (2) are separated.

4. The method of one of claims 1 through 3, **characterized in that** the adhesion promoter (15) is activated immediately prior to the connecting of the sheet metal parts (2) in materially bonded fashion.

5. The method of one of claims 1 through 4, **characterized in that** the adhesion promoter (15) and the adhesive layer (8, 9) are activated simultaneously.

6. The method of claim 4 or 5, **characterized in that** parts (2, 19) are separated from the sheet metal strip (5) multiple times, and the adhesion promoter (15) and/or the adhesive layer (8, 9) is activated prior to the separation of the sheet metal part (2) from the sheet metal strip (5).

7. The method of one of claims 1 through 6, **characterized in that** sheet metal parts (2) are separated from the sheet metal strip (5) having an adhesive layer (8, 9) provided over the full surface of both sides (6, 7) of the sheet metal strip (5).

8. The method of one of claims 1 through 7, **characterized in that** the sheet metal parts (2), stacked one above the other in column form below the separator mechanism (10), connect to one another in materially bonded fashion.

9. The method of claim 8, **characterized in that** the sheet metal parts are stacked one above another in a line (13) that exerts a resistance to the migration of the sheet metal parts (2) in the line (13).

10. The method of one of claims 1 through 9, **characterized in that** the adhesion promoter (15) comprises polyvinyl alcohol, a cellulose compound, more particularly carboxymethylcellulose, or an amine with cross-linking reaction.

11. The method of one of claims 1 through 10, **characterized in that** fillers (23), such as kaolin, are added to the mixture (14).

12. The method of one of claims 1 through 11, **characterized in that** a reaction accelerator, more particularly water-soluble, such as 2-methylimidizole and/or a water-soluble cross-linker, more particularly melamine-based, such as partly etherified melamine resin, and/or a cross-linking agent that is dispersible in water, more particularly with an isocyanate base and/or a cross-linking agent dispersible in water, more particularly an isocyanate-based cross-linking agent, such as isophorone diisocyanate, is added to the mixture.

13. A laminated core having sheet metal parts (2) that are connected in materially bonded fashion, having at least two curable polymer adhesive layers (8, 9), namely baking enamel, provided between two sheet metal parts (2), **characterized in that** between two adhesive layers (8, 9), an adhesion promoter (15) is provided, wherein the adhesion promoter (15) comprises polyvinyl alcohol, a cellulose compound, more particularly carboxymethylcellulose, or an amine with cross-linking reaction.

## Revendications

1. Procédé pour assembler des pièces de tôle (2) pour former un noyau feuilleté (3), dans lequel des pièces de tôle (2) sont découpées dans une bande de tôle (5) qui porte, au moins par endroits, une couche de colle polymère durcissable (8, 9), à savoir de la laque thermo-adhérente, les pièces de tôle (2) étant disposées l'une sur l'autre avec leurs faces enduites de colle dirigées l'une vers l'autre et étant assemblées par liaison de matière, sous pression, pour former un noyau feuilleté (3), **caractérisé en ce qu'**un mélange (14) qui présente de l'eau et un agent adhésif (15) thermoplastique et/ou polymérisable est prévu sur au moins l'une des couches de colle polymère durcissable (8, 9) dirigées l'une vers l'autre lors de l'assemblage des pièces de tôle (2) par liaison de matière, et **en ce que** le mélange (14) est séché avant la liaison par matière des pièces de tôle (2).

2. Procédé selon la revendication 1, **caractérisé en ce que** l'agent adhésif (15) est soluble dans l'eau et/ou la couche de colle (8, 9) est prévue sur les deux côtés (6, 7) de la bande de tôle (5) et/ou les pièces de tôle (2) sont séparées de la bande de tôle (5) par découpage.

3. Procédé selon la revendication 1 or 2, **caractérisé en ce que** le mélange (14) est appliqué sur la bande de tôle (5) avant une séparation des pièces de tôle (2).

4. Procédé selon l'une des revendications 1 à 3, **caractérisé en ce que** l'agent adhésif (15) est activé immédiatement avant l' assemblage par liaison de matière des pièces de tôle (2).

5. Procédé selon l'une des revendications 1 à 4, **caractérisé en ce que** l'agent adhésif (15) et la couche de colle (8, 9) sont activés simultanément.

6. Procédé selon la revendication 4 ou 5, **caractérisé en ce que** plusieurs pièces (2, 19) sont séparées de la bande de tôle (5), l'agent adhésif (15) et/ou la couche de colle (8, 9) étant activés avant la séparation de la pièce de tôle (2) de la bande de tôle (5).

7. Procédé selon l'une des revendications 1 à 6, **caractérisé en ce que** des pièces de tôle (2) sont séparées d'une bande de tôle (5) avec une couche de colle (8, 9) prévue sur toute la surface des deux côtés (6, 7) de la bande de tôle (5).

8. Procédé selon l'une des revendications 1 à 7, **caractérisé en ce que** les pièces de tôle (2) empilées les unes sur les autres sous la forme de colonnes sous le dispositif de séparation (10) se lient entre elles par liaison de matière sous la pression du dispositif de séparation (10).

9. Procédé selon la revendication 8, **caractérisé en ce que** les pièces de tôle sont empilées les unes sur les autres dans un conduit (13) qui exerce une résistance lors du déplacement continu des pièces de tôle (2) dans le conduit (13).

10. Procédé selon l'une des revendications 1 à 9, **caractérisé en ce que** l'agent adhésif (15) est constitué d'alcool polyvinylique, d'un composé cellulosique notamment de carboxyméthylcellulose ou d'une amine ayant une réaction de réticulation.

11. Procédé selon l'une des revendications 1 à 10, **caractérisé en ce que** des charges (23), telles que du kaolin, sont ajoutées au mélange (14).

12. Procédé selon l'une des revendications 1 à 11, **caractérisé en ce qu'**un accélérateur de réaction notamment hydrosoluble, tel que par exemple des 2-méthylimidazoles, et/ou un agent de réticulation hydrosoluble notamment à base de mélamine, tel que par exemple une résine mélamine partiellement éthérifiée, et/ou un agent de réticulation dispersible dans l'eau notamment à base d'isocyanate, tel que par exemple le diisocyanate d'isophorone, est ajouté au mélange.

13. Noyau feuilleté avec des pièces de tôle (2) assemblées par liaison de matière, avec au moins deux couches de colle polymère durcissables (8, 9), à savoir de la laque thermo-adhérente, prévues entre deux pièces de tôle (2) **caractérisé en ce qu'**un agent adhésif (15) est prévu entre les deux couches de colle (8, 9), l'agent adhésif (15) étant constitué d'alcool polyvinylique, d'un composé cellulosique notamment de carboxyméthylcellulose ou d'une amine ayant une réaction de réticulation.
